# EUROPÄISCHE PATENTSCHRIFT

(11) **EP 3 042 938 B1**
(45) Veröffentlichungstag und Bekanntmachung des Hinweises auf die Patenterteilung: **05.04.2017**
(21) Anmeldenummer: 15150674.8
(22) Anmeldetag: 09.01.2015
(51) Int. Cl.: C09D 13/00, B43K 19/00

(54) **Mine oder Kreide enthaltend Graphit und eine polymere Bindemittelmatrix**
Lead or chalk containing graphite and a polymer binder matrix
Mine ou craie comprenant du graphite et matrice de liant polymère

(43) Veröffentlichungstag der Anmeldung: 13.07.2016
(73) Patentinhaber: Faber- Castell AG, 90546 Stein (DE)
(72) Erfinder: Appel, Reiner, 90522 Oberasbach (DE); von Godin, Harald, 90522 Oberasbach (DE); Lugert, Gerhard, 90431 Nürnberg (DE); Noll, Michael, 90411 Nürnberg (DE)
(74) Vertreter: Schlögl, Markus

(56) Entgegenhaltungen:
- WO-A1-2010/006744
- DE-A1-102004 021 048
- JP-A- S5 149 826
- US-A- 3 769 045

## Beschreibung

Die Erfindung betrifft eine Graphit enthaltende Mine oder Kreide zum Schreiben, Zeichnen und Malen, bei der das Graphit polymergebunden ist, d.h. die Mine enthält ein polymeres Bindemittel, das üblicherweise thermoplastisch ist, so dass sich die Minen-Ausgangsmasse zu einem Minenstrang extrudieren lässt. Die Erfindung betrifft außerdem einen Stift mit einer Mine der genannten Art. Herkömmlicherweise werden für solche beispielsweise aus DE 10 2004 021 048 A1 bekannten Minen Polyolefine wie Polypropylen oder Polyethylen eingesetzt. Neben einer problemlosen Extrudierbarkeit der jeweiligen Ausgangs-Minenmassen ist eine weitere Anforderung an die jeweiligen Minen, dass diese eine relative hohe Menge von Graphit und gegebenenfalls von weiteren partikelförmigen Füllstoffen aufnehmen können, wobei dadurch aber die geforderten mechanischen Eigenschaften der Mine bzw. Kreide wie z.B. deren Bruchfestigkeit erhalten bleiben müssen. Dies gelingt prinzipiell nur, wenn die Füllstoffpartikel in der Bindemittelmatrix gleichmäßig verteilt und fest mit ihr verbunden sind. Mit anderen Worten darf zwischen dem Graphit und gegebenenfalls weiteren Füllstoffpartikeln und der Bindemittelmatrix keine Unverträglichkeit bestehen, was einer festen Einbindung der Füllstoffe in der Bindemittelmatrix entgegenstehen und zu einer Vielzahl von Sollbruchstellen in der Mine führen würden. Vor allem bei Graphitminen ist es ein weiteres Problem, dass diese ein relativ breites Anwendungsspektrum abdecken und dementsprechend in einer relativ großen Zahl unterschiedlicher Härtegrade vorliegen müssen. So ist es oft der Fall, dass sich mit ein und derselben Bindemittelmatrix nur ein kleiner Bereich der Härteskala abbilden lässt, so dass für andere Härtebereiche andere Bindemittelsysteme eingesetzt werden müssen.

Davon ausgehend ist es die Aufgabe der Erfindung, eine graphithaltige Mine, eine Kreide oder einen Stift mit einer Graphitmine vorzuschlagen, welche hinsichtlich der geschilderten Problemlage verbessert sind.

Diese Aufgabe wird durch eine Mine oder Kreide gemäß Anspruch 1 und einen Stift gemäß Anspruch 18 gelöst. Danach ist bei einer Mine oder Kreide, im Folgenden wird vereinfachend auf eine Mine Bezug genommen, das Graphit und gegebenenfalls weitere Partikel in einer polymeren Bindemittelmatrix gebunden, die zumindest teilweise aus wenigstens einem ersten Polymer, welches ein mit Maleinsäureanhydrid gepfropftes Polyolefin, vorzugsweise Polyethylen oder Polypropylen ist, besteht. Es hat sich überraschenderweise gezeigt, dass auch eine allein aus dem genannten Polymer gebildete Bindemittelmatrix in der Lage ist, sowohl Graphit, das der Minen-Ausgangsmasse üblicherweise als Pulver zugesetzt wird, als auch andere organische und anorganische Füllstoffe wie Kaolin oder Talkum, homogen verteilt zu binden. Der jeweils gewünschte Härtegrad lässt sich insbesondere durch die Beimengung eines Weichmachers bzw. eines Gleitmittels, etwa eines Wachses, einstellen. Neben den erwähnten Maleinsäureanhydrid enthaltenden ersten Polymeren, welche insbesondere hinsichtlich ihrer Bindungsfähigkeit für Partikel optimal sind, können auch Polymere mit anderen polaren Gruppen, beispielsweise Acrylsäure und Silane eingesetzt werden.

Eine besonders bevorzugte Ausführungsvariante betrifft eine Mine mit einer Bindemittelmatrix, die wenigstens ein zweites Polymer, vorzugsweise Polyolefin, Polystyrol, SAN oder ABS, enthält, das nicht mit Maleinsäureanhydrid gepfropft ist. Eine solche Bindemittelmatrix kann einen besonders hohen Anteil an Graphit und anderen partikelförmigen Bestandteilen aufnehmen. Insbesondere ergibt sich im Hinblick auf die Einstellung der Minenfestigkeit und des Härtegrades ein weiterer Parameter, nämlich das Mischungsverhältnis aus erstem und zweitem Polymer. Es ist somit gewährleistet, dass mit ein und derselben Bindemittelmatrix ein breiter Bereich der Härteskala für Graphit- bzw. Bleistiftminen abgedeckt werden kann.

Wie oben erwähnt, enthält die Mine wenigstens ein Gleitmittel. Dieses wirkt sich auf die Konsistenz der Mine prinzipiell so aus, dass der Härtegrad der Mine sich mit steigendem Gehalt an Gleitmittel verringert und umgekehrt. Insbesondere wenn wachs- fett- oder ölartige Gleitmittel enthalten sind, verringern diese bei der Extrusion einer Minen-Ausgangsmasse zu einem Minenstrang mit Hilfe eines Extruders die externe und/oder innere Reibung, also die Reibung zwischen der Minen-Ausgangsmasse und dem Extruder und die Reibung zwischen den Minenbestandteilen, etwa zwischen den Polymermolekülen. Hinsichtlich des Härtegrads bzw. der entsprechenden Konsistenz der Mine haben sich Gleitmittel aus der Gruppe Pflanzenöl, Fettsäure, Fettsäurederivat, Kohlenwasserstoffwachs, Triglycerid als besonders geeignet herausgestellt.

Neben Graphitpulver (kristallin oder amorph), das mit einem Anteil von 5 Gew.% bis 80 Gew.% in der Mine enthalten ist und für die im Wesentlichen schwarze Färbung des Minenaufstrichs verantwortlich ist, können Farbmittel, also Pigmente und/oder Farbstoffe, beigemengt sein, die einen farbigen Minenaufstrich ergeben. Beispielsweise kann mit einem Zusatz von Ultramarin (anorganisches Pigment) eine grau-blaue oder mit einem Zusatz von Pigment Red 254 (organischer Farbstoff) eine rote Graphitmine erzeugt werden. Um die schwarze Farbe des Graphits zu verstärken können Rußpartikel oder andere Schwarzpigmente zugefügt werden.

Eine weitere hervorzuhebende Eigenschaft der erfindungsgemäßen Mine besteht darin, dass als Gleitmittel die hochwirksamen und zudem preisgünstigen Fettsäuresalze, insbesondere Stearate wie Calciumstearat verwendet werden können. Dies ist insofern überraschend, als zu erwarten wäre, dass das Fettsäuresalz an die Maleinsäureanhydrid-Gruppe des ersten Polymers gebunden und dadurch zumindest teilweise unwirksam wird. Als besonders wirksames Gleitmittel hat sich dabei die Kombination aus Fettsäuresalz, vorzugsweise Calciumstearat, und einem anderen Gleitmittel, insbesondere einer Fettsäure, vorzugsweise Stearinsäure, herausgestellt.

Wie oben schon erwähnt wurde, ist ein Parameter für Einstellung der gewünschten Konsistenz der Mine deren Polymergehalt. Die Untergrenze dieses Gehalts liegt hinsichtlich des ersten Polymers bei 1 Gew.%, vorzugsweise bei 3 Gew.%. Darunter ist ein auf der Anwesenheit der Maleinsäureanhydrid-Gruppe beruhender Effekt nicht bzw. kaum mehr zu beobachten. Nach oben hin ist der Gehalt an erstem Polymer auf 30 Gew.%, vorzugsweise 25 Gew.% begrenzt. Hinsichtlich des zweiten Polymers erstreckt sich der nutzbringend anwendbare Gehaltsbereich von 1 Gew.% bis 30 Gew.% oder besser 25 Gew.%. Auch im Falle des zweiten Polymers werden bessere Ergebnisse erzielt, wenn davon mindestens 3 Gew.% in der Mine enthalten sind.

Die beschriebenen Minen und Kreiden können ohne Ummantelung verwendet oder mit einer Minenumhüllung versehen werden. Stifte werden heute vielfach durch eine Co-Extrusion hergestellt, d.h. der Minenstrang wird gleichzeitig mit einer ihn umfassenden Ummantelung extrudiert. In einem solchen Fall ist es vorteilhaft, wenn als Material für die Ummantelung ein Holzersatzwerkstoff verwendet wird, der einen vorzugsweise organischen, Hydroxylgruppen aufweisenden Füllstoff, z.B. ein Cellulose und/oder Lignin haltiges Material, beispielsweise Holzpartikel enthält. Die Maleinsäureanydrid-Gruppe des ersten Polymers koppelt im Bereich der Grenzflächen zwischen Ummantelung und Mine unter Ausbildung einer chemischen Bindung an die Hydroxylgruppe des Füllstoffs an. Die Mine wird auf diese Weise axial in der Ummantelung gehalten, so dass zusätzliche Maßnahmen zur Minenfixierung, etwa eine Haftschicht zwischen Mine und Ummantelung, nicht erforderlich sind.

Besonders vorteilhaft bei der in Rede stehenden Ausführungsvariante ist es, wenn für die Ummantelung ein Holzersatzwerkstoff verwendet wird, der eine gleiche oder zumindest chemisch ähnliche Bindemittelmatrix, vorzugsweise ein Polyolefin und/oder ein mit Maleinsäureanhydrid gepfropftes Polyolefin aufweist. Unverträglichkeiten zwischen dem Material der Ummantelung und der Mine sind dann eher nicht zu erwarten.

Die Erfindung wird nun unter Bezugnahme auf die untenstehende Tabelle sowie den beigefügten Zeichnungen, die einen Stift und eine schematisierte Darstellung einer Co-Extrusionseinrichtung zeigen, näher erläutert.

Die in der Tabelle aufgeführten erfindungsgemäßen Ausführungsbeispielen betreffen Minen mit einem Härtegrad von F bis 3B, also mittelharte (F) bis sehr weiche (4B) Minen. Bei den Minen E, F und G handelt sich um solche mit einem Härtegrad von 3B. Bei der Einstellung dieses Härtegrades hat es sich als zweckmäßig erwiesen, ausschließlich mit dem ersten Polymer als Bindemittel zu arbeiten.

Bei den Ausführungsbeispielen A bis D besteht die Bindemittelmatrix aus einer Mischung von erstem und zweitem Polymer, weist also neben dem gepfropften Polymer noch wenigstens ein Polyolefin, nämlich Polystyrol oder Polypropylen auf. Beispiel H ist eine sehr weiche Mine mit einem Härtegrad von 4B. Die weiche Konsistenz der Mine ergibt sich vor allem aus dem hohen Anteil an Calciumstearat und Stearinsäure sowie Palmöl und auch daraus, dass kein Füllstoff enthalten ist.

Die Vergleichsbeispiele V1 und V2 unterscheiden sich von den erfindungsgemäßen Beispielen im Wesentlichen nur durch dadurch, dass ihre Bindemittelmatrix ausschließlich von dem zweiten Polymer (Polypropylen bzw. Polyethylen) gebildet ist. Bei diesen Minen ist keine feste Einbindung in die Bindemittelmatrix möglich. Sie sind daher unbrauchbar.

| | **Ausführungsbeispiele** | | | | | | | | | |
|---|---|---|---|---|---|---|---|---|---|---|
| Beispiel Nr. | A | B | C | D | E | F | G | H | V1 | V2 |
| **erstes Polymer** | | | | | | | | | | |
| PE MAH gepfropft ¹⁾ | 5 | 20 | 10 | 8 | 2 | 18 | 20 | 5 | | |
| PP MAH gepfropft ²⁾ | | | | | 16 | | | | | |
| | | | | | | | | | | |
| **zweites Polymer** | | | | | | | | | | |
| HDPE ³⁾ | | 4 | | | | | | | | 20 |
| PP ⁴⁾ | | | | | | | | | 20 | |
| PS ⁵⁾ | 20 | | 10 | 17 | | | | 19 | | |
| | | | | | | | | | | |
| **Graphitpulver** | 55 | 76 | 52 | 55 | 52 | 57 | 65 | 61 | 65 | 65 |
| | | | | | | | | | | |
| **Füllstoff** (Kaolin) | 19 | | 21 | 12 | 20 | 10 | 10 | | 10 | 10 |
| | | | | | | | | | | |
| **Gleitmittel** | | | | | | | | | | |
| Calciumstearat | | | 3 | | 1 | 3 | | 5 | | |
| Stearindiamid | 1 | | | | 1 | | | | | |
| gehärtetes Palmöl | | | | 8 | 4 | | | 5 | | 5 |
| gehärtetes Rapsöl | | | | | 4 | 12 | | | | |
| Kohlenwasserstoffwachs | | | | | | | 5 | | 5 | |
| Stearinsäure | | | 4 | | | | | 5 | | |
| | | | | | | | | | | |
| **Härtegrad** | F | HB | B | 2B | 3B | 3B | 3B | 4B | XX | XX |

| | | | | | | | | | | |
|---|---|---|---|---|---|---|---|---|---|---|
| Gehaltsangaben in Gew. % / XX = unbrauchbar Produkt/ Bezugsquelle: 1) Fusabond E 100 / DuPont de Nemours GmbH, D-63263 Neu-Isenburg; 2) Licocene PE MA 6252 / Clariant, D-20433 Hamburg; 3) Hostalen ACP6541 A UV / Ultrapolymers Deutschland GmbH, D-90451 Nürnberg; 4) PPH 7062 / A. Schulmann GmbH, D-50170 Kerpen; 5) PS 124N/L / Ultrapolymers Deutschland GmbH, D-90451; | | | | | | | | | | |

Zur Herstellung einer Mine 1 wird zunächst etwa mit Hilfe von Schnellmischern bei hohen Drehzahlen aus den einzelnen Rohmaterialien ein Compound hergestellt. Eine andere Möglichkeit besteht darin, beispielsweise mit Schneckenextrudern die Rohmaterialien homogenisiert aufzuschmelzen und Pellets herzustellen. Die Ausformung des Compounds bzw. der Pellets erfolgt mit Ein- oder Zweischneckenextrudern. Je nach den verwendeten Polymeren und Gleitmitteln erfolgt sowohl die Compoundierung als auch die Extrusion von Minensträngen in einem Temperaturbereich von 130 °C bis 200 °C. Die Minenstränge werden zu Minen 1 abgelängt und diese nach einer Abkühlung als Kreide oder als Mine z.B. für mechanische, also mit einem Minen-Vorschubmechanismus versehene Stifte verwendet oder auf übliche Weise mit einer Ummantelung 2 beispielsweise aus Holz versehen.

Im Falle eines Stiftes können dessen Mine und Ummantelung ein Co-Extrudat sein, d.h. sie sind gemeinsam durch eine Co-extrusion erzeugt worden. Dabei wird eine Co-Extrusionseinrichtung 3 mit einer Extrusionsöffnung 4 eingesetzt. Deren Umrissform entspricht der Querschnittsform des zu erzeugenden Stifts. Im Zentrum der Extrusionsöffnung 4 mündet ein Kanal 5 aus, über den schmelzflüssig erhitzte Minenmasse zugeführt wird. Das Material der Ummantelung 2 ist ein Holzersatzwerkstoff, ein sog. Wood Plastic Compound, welches in schmelzflüssiger Form mit einem Verdrängungselement 6, etwa einer Schnecke, zur Extrusionsöffnung 4 gefördert wird. Der dabei entstehende Extrusionsstrang 7 wird zu Stiften 8 abgelängt. Im Holzersatzwerkstoff ist zumindest ein Füllstoff, beispielsweise Holzpartikel, enthalten, der Hydroxylgruppen aufweist. Zwischen diesen und den Maleinsäureanydrid-Gruppen des ersten Polymers der Mine 1 bildet sich im Bereich der Trennfuge 9 zwischen Mine 1 und Ummantelung 2 eine chemische Bindung aus. Die Mine 1 wird auf diese Weise ohne weiteres Zutun axial in der Ummantelung 2 fixiert.

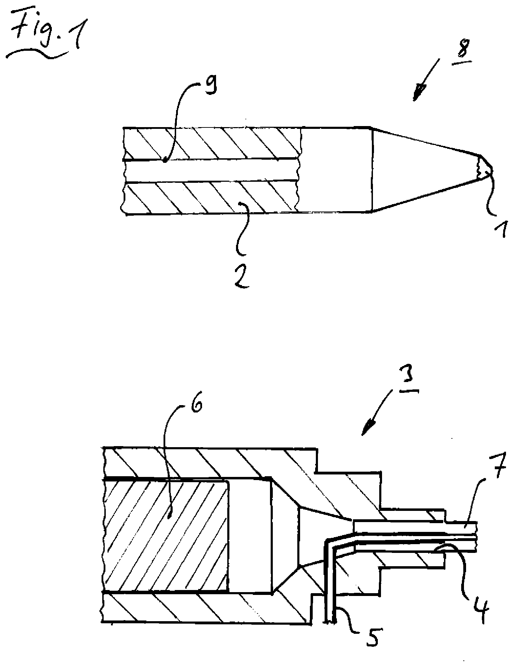

## Patentansprüche

1. Mine oder Kreide enthaltend Graphit, bei der das Graphit in einer polymeren Bindemittelmatrix gebunden ist, **dadurch gekennzeichnet, dass** die Bindemittelmatrix zumindest teilweise aus wenigstens einem ersten Polymer besteht, welches ein mit Maleinsäureanhydrid gepfropftes Polyolefin ist.

2. Mine oder Kreide nach Anspruch 1, **dadurch gekennzeichnet, dass** die Bindemittelmatrix wenigstens ein zweites Polymer enthält, das nicht mit Maleinsäureanhydrid gepfropft ist.

3. Mine oder Kreide nach Anspruch 1 oder 2, **dadurch gekennzeichnet, dass** das erste Polymer mit Maleinsäureanhydrid gepfropftes Polyethylen oder Polypropylen ist.

4. Mine oder Kreide nach Anspruch 1, 2 oder 3, **dadurch gekennzeichnet, dass** das zweite Polymer ein Polyolefin, Polystyrol, SAN oder ABS ist.

5. Mine oder Kreide nach einem der vorhergehenden Ansprüche, **dadurch gekennzeichnet, dass** die Mine 5 Gew.% bis 80 Gew.% Graphit enthält.

6. Mine oder Kreide nach einem der vorhergehenden Ansprüche, **dadurch gekennzeichnet, dass** ein Farbmittel enthalten ist.

7. Mine oder Kreide nach einem der vorhergehenden Ansprüche, **dadurch gekennzeichnet, dass** wenigstens ein Gleitmittel enthalten ist.

8. Mine oder Kreide nach Anspruch 7, **gekennzeichnet durch** ein wachs- fettoder ölartiges Gleitmittel.

9. Mine oder Kreide nach Anspruch 8, **gekennzeichnet durch** ein Gleitmittel aus der Gruppe Pflanzenöl, Fettsäure, Fettsäurederivat, Kohlenwasserstoffwachs, Triglycerid.

10. Mine oder Kreide nach Anspruch 8 oder 9, **dadurch gekennzeichnet, dass** mindestens zwei verschiedene Gleitmittel enthalten sind, von denen wenigstens eines ein Fettsäuresalz ist.

11. Mine oder Kreide nach Anspruch 10, **dadurch gekennzeichnet, dass** wenigstens ein Fettsäuresalz und wenigstens eine Fettsäure enthalten sind.

12. Mine oder Kreide nach einem der vorhergehenden Ansprüche, **dadurch gekennzeichnet, dass** 1 Gew.% bis 30 Gew.% des ersten Polymers enthalten sind.

13. Mine oder Kreide nach Anspruch 12, **gekennzeichnet durch** einen Gehalt an erstem Polymer von 1 Gew.% bis 25 Gew.%.

14. Mine oder Kreide nach Anspruch 12 oder 13, **gekennzeichnet durch** einen Gehalt an erstem Polymer von wenigstens 3 Gew.%.

15. Mine oder Kreide nach einem der Ansprüche 2 bis 14, **dadurch gekennzeichnet, dass** 1 Gew.% bis 30 Gew. % des zweiten Polymers enthalten sind.

16. Mine oder Kreide nach Anspruch 15, **gekennzeichnet durch** einen Gehalt an zweitem Polymer von 1 Gew.% bis 25 Gew.%.

17. Mine oder Kreide nach Anspruch 15 oder 16, **gekennzeichnet durch** einen Gehalt an zweitem Polymer von wenigstens 3 Gew.%.

18. Stift mit einer Mine nach einem der vorhergehenden Ansprüche.

19. Stift nach Anspruch 18, **gekennzeichnet durch** eine Minenummantelung (2) aus einem Holzersatzwerkstoff, der einen Hydroxylgruppen aufweisenden Füllstoff enthält.

20. Stift nach Anspruch 19, **dadurch gekennzeichnet, dass** in der Minenummantelung (2) Holzpartikel enthalten sind.

21. Stift nach Anspruch 19 oder 20, **dadurch gekennzeichnet, dass** die Minenummantelung (2) ein mit Maleinsäureanhydrid gepfropftes Polymer enthält.

22. Stift nach einem der Ansprüche 19 bis 21, **dadurch gekennzeichnet, dass** die Minenummantelung (2) ein Polyolefin als Bindemittel enthält.

23. Stift nach einem der Ansprüche 19 bis 22, **dadurch gekennzeichnet, dass** die Mine (1) und die Minenummantelung (2) ein Co-Extrudat sind.

## Claims

1. Lead or chalk containing graphite, in which the graphite is bound in a polymer binder matrix, **characterised in that** the binder matrix consists at least partially of at least one first polymer that is a maleic anhydride grafted polyolefin.

2. Lead or chalk according to claim 1, **characterised in that** the binder matrix contains at least one second polymer that is not maleic anhydride grafted.

3. Lead or chalk according to claim 1 or 2, **characterised in that** the first polymer is a maleic anhydride grafted polyethylene or polypropylene.

4. Lead or chalk according to claim 1, 2 or 3, **characterised in that** the second polymer is a polyolefin, polystyrene, SAN or ABS.

5. Lead or chalk according to one of the preceding claims, **characterised in that** the lead contains 5 wt% to 80 wt% graphite.

6. Lead or chalk according to one of the preceding claims, **characterised in that** a colourant is contained.

7. Lead or chalk according to one of the preceding claims, **characterised in that** at least one lubricant is contained.

8. Lead or chalk according to claim 7, **characterised by** a wax-, fat- or oil-based lubricant.

9. Lead or chalk according to claim 8, **characterised by** a lubricant from the group of plant oil, fatty acid, fatty acid derivative, hydrocarbon wax, triglyceride.

10. Lead or chalk according to claim 8 or 9, **characterised in that** at least two different lubricants are contained, at least one of which is a fatty acid salt.

11. Lead or chalk according to claim 10, **characterised in that** at least one fatty acid salt and at least one fatty acid are contained.

12. Lead or chalk according to one of the preceding claims, **characterised in that** 1 wt% to 30 wt% of the first polymer are contained.

13. Lead or chalk according to claim 12, **characterised by** a first polymer content of 1 wt% to 25 wt%.

14. Lead or chalk according to claim 12 or 13, **characterised by** a first polymer content of at least 3 wt%.

15. Lead or chalk according to one of claims 2 to 14, **characterised in that** 1 wt% to 30 wt% of the second polymer are contained.

16. Lead or chalk according to claim 15, **characterised by** a second polymer content of 1 wt% to 25 wt%.

17. Lead or chalk according to claim 15 or 16, **characterised by** a second polymer content of at least 3 wt%.

18. Pencil having a lead according to one of the preceding claims.

19. Pencil according to claim 18, **characterised by** a lead sheathing (2) made of a wood-replacement material that contains a filler having hydroxyl groups.

20. Pencil according to claim 19, **characterised in that** wood particles are contained in the lead sheathing (2).

21. Pencil according to claim 19 or 20, **characterised in that** the lead sheathing (2) contains a maleic anhydride grafted polymer.

22. Pencil according to one of claims 19 to 21, **characterised in that** the lead sheathing (2) contains a polyolefin as a binder.

23. Pencil according to one of claims 19 to 22, **characterised in that** the lead (1) and the lead sheathing (2) are a co-extrudate.

## Revendications

1. Mine ou craie contenant du graphite, dans laquelle le graphite est fixé dans une matrice de liant polymètre, **caractérisée en ce que** la matrice de liant polymère consiste, au moins en partie, en au moins un premier polymère, qui est une polyoléfine greffée par de l'anhydride maléique.

2. Mine ou craie suivant la revendication 1, **caractérisée en ce que** la matrice de liant contient au moins un deuxième polymère, qui n'est pas greffé par de l'anhydride maléique.

3. Mine ou craie suivant la revendication 1 ou 2, **caractérisée en ce que** le premier polymère est du polyéthylène ou du polypropylène greffé par de l'anhydride maléique.

4. Mine ou craie suivant la revendication 1, 2 ou 3, **caractérisée en ce que** le deuxième polymère est une polyoléfine, du polystyrène, du SAN ou de l'ABS.

5. Mine ou craie suivant l'une des revendications précédentes, **caractérisée en ce que** la mine contient de 5% en poids à 80% en poids de graphite.

6. Mine ou craie suivant l'une des revendications précédentes, **caractérisée en ce qu'**elle contient un colorant.

7. Mine ou craie suivant l'une des revendications précédentes, **caractérisée en ce qu'**elle contient au moins un lubrifiant.

8. Mine ou craie suivant la revendication 7, **caractérisée par** un lubrifiant de type cire, graisse ou huile.

9. Mine ou craie suivant la revendication 8, **caractérisée par** un lubrifiant choisi dans le groupe d'une huile végétale, d'un acide gras, d'un dérivé d'acide gras, d'une cire d'hydrocarbure, d'un triglycéride.

10. Mine ou craie suivant la revendication 8 ou 9, **caractérisée en ce qu'**elle contient au moins deux lubrifiants différents, dont l'un au moins est un sel d'acide gras.

11. Mine ou craie suivant la revendication 10, **caractérisée en ce qu'**elle contient au moins un sel d'acide gras et au moins un acide gras.

12. Mine ou craie suivant l'une des revendications précédentes, **caractérisée en ce qu'**elle contient de 1% en poids à 30% en poids du premier polymère.

13. Mine ou craie suivant la revendication 12, **caractérisée par** une teneur en le premier polymère de 1% en poids à 25% en poids.

14. Mine ou craie suivant la revendication 12 ou 13, **caractérisée par** une teneur en le premier polymère de moins de 3% en poids.

15. Mine ou craie suivant l'une des revendications 2 à 14, **caractérisée en ce qu'**elle contient de 1% en poids à 30% en poids du deuxième polymère.

16. Mine ou craie suivant la revendication 15, **caractérisée par** une teneur en le deuxième polymère de 1% en poids à 25% en poids.

17. Mine ou craie suivant la revendication 15 ou 16, **caractérisée par** une teneur en le deuxième polymère de moins de 3% en poids.

18. Crayon ayant une mine suivant l'une des revendications précédentes.

19. Crayon suivant la revendication 18, **caractérisé par** une gaine (2) de mine en un matériau de substitution du bois, qui contient une charge ayant des groupes hydroxyles.

20. Crayon suivant la revendication 19, **caractérisé en ce que** des particules de bois sont contenues dans la gaine (2) de la mine.

21. Crayon suivant la revendication 19 ou 20, **caractérisé en ce que** la gaine (2) de la mine contient un polymère greffé par de l'anhydride maléique.

22. Crayon suivant l'une des revendications 19 à 21, **caractérisé en ce que** la gaine (2) de la mine contient une polyoléfine comme liant.

23. Crayon suivant l'une des revendications 19 à 22, **caractérisé en ce que** la mine (1) et la gaine (2) de la mine sont un produit coextrudé.la mine (1) et la gaine (2) de la mine sont un produit coextrudé.
